# EUROPEAN PATENT APPLICATION

(11) **EP 4 778 811 A1**
(43) Date of publication of application: **22.07.2026**
(21) Application number: 25747735.6
(22) Date of filing: 23.01.2025
(51) Int. Cl.: B62D 25/08

(54) **VEHICLE REAR STRUCTURE AND VEHICLE**

(30) Priority: 31.01.2024 CN 202410139712
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: QIN, Yinjiang, Ningbo, Zhejiang 315899 (CN); YANG, Zhigang, Ningbo, Zhejiang 315899 (CN); WANG, Cong, Ningbo, Zhejiang 315899 (CN); WEI, Yunlong, Ningbo, Zhejiang 315899 (CN); WANG, Shaoya, Ningbo, Zhejiang 315899 (CN); LIN, Xianghui, Ningbo, Zhejiang 315899 (CN)
(74) Representative: Murgitroyd & Company
(86) International application number: PCT/CN2025/074167
(87) International publication number: WO 2025/162165

(57) **Abstract**

Disclosed in the present application are a vehicle rear structure and a vehicle. In the vehicle rear structure, a quarter window area running through a side wall inner panel is provided on the side wall inner panel, and a D-pillar reinforcement panel, a roof crossmember and a roof rail outer panel are connected on an upper side of the quarter window area to form a first force transmission path; a first outer member and a first inner member are both fixed to a lower side of the quarter window area and located on outer and inner sides of the side wall inner panel, respectively; a C-pillar reinforcement upper panel is fixed on the outer side of the side wall inner panel, an upper end of the C-pillar reinforcement upper panel is fixedly connected to the roof rail outer panel, and the C-pillar reinforcement upper panel has a part extending from a front side of the quarter window area to a lower side of the quarter window area and fixedly connected to the first outer member; the C-pillar reinforcement upper panel, the first outer member and the first inner member are provided with openings facing the side wall inner panel; the side wall inner panel encloses a first outer cavity and a second outer cavity from front to back with the C-pillar reinforcement upper panel and the first outer member, and the side wall inner panel further encloses a first inner cavity with the first inner member; and on the front and rear sides of the second outer cavity and the first inner cavity, the first inner member, the side wall inner panel and the first outer member form a laminated structure, and are fixedly connected at the laminated structure.

## Description

The present application claims priority to Chinese Patent Application No. 202410139712.5, filed with the China National Intellectual Property Administration on January 31, 2024 and entitled "VEHICLE REAR STRUCTURE AND VEHICLE", which is incorporated herein by reference in its entirety.

### TECHNICAL FIELD

The present application relates to, but is not limited to, the technical field of vehicle structures, and in particular, to a rear vehicle body structure and a vehicle.

### BACKGROUND

From the front of a vehicle to the rear of the vehicle, a vehicle body structure includes a C-ring. In a related technology, the C-ring includes at least portions of two opposite C-pillar assemblies and a roof cross member. Ideally, the C-ring should be an approximately circular-shaped structure in the form of a parallelogram with rounded corners. In the field of vehicle design, the structural strength and design reasonableness of the C-ring are important factors that determine vehicle performance such as force transmission efficiency and torsional performance (for example, torsional mode and torsional rigidity) of a vehicle body.

However, an existing C-ring structure leads to relatively poor performance in terms of force transmission efficiency, rigidity, torsional performance, and the like of the vehicle body.

### SUMMARY

The following is a summary of subjects detailed herein. The summary is not intended to limit the protection scope of the claims.

Embodiments of the present application provide a rear vehicle body structure and a vehicle. Various aspects of embodiments of the present application are described below.

According to a first aspect, the present application provides a rear vehicle body structure. The rear vehicle body structure includes a body side inner panel, a C-pillar upper reinforcement panel, a first outer member, a first inner member, a D-pillar reinforcement panel, a roof cross member, and a roof longitudinal rail outer panel. The body side inner panel is provided with a rear quarter window region penetrating through the body side inner panel. The D-pillar reinforcement panel, the roof cross member, and the roof longitudinal rail outer panel are connected on an upper side of the rear quarter window region to form a first force transmission path. Both the first outer member and the first inner member are fixed on a lower side of the rear quarter window region and are located on an outer side and an inner side of the body side inner panel, respectively. The C-pillar upper reinforcement panel is fixed on the outer side of the body side inner panel, an upper end of the C-pillar upper reinforcement panel is fixedly connected to the roof longitudinal rail outer panel, and the C-pillar upper reinforcement panel has a portion that extends from a front side of the rear quarter window region to the lower side of the rear quarter window region and is fixedly connected to the first outer member.

Each of the C-pillar upper reinforcement panel, the first outer member, and the first inner member has a structure with an opening facing the body side inner panel, and the first inner member and the first outer member are disposed with openings thereof facing each other. A first outer cavity and a second outer cavity are respectively enclosed by the body side inner panel and the C-pillar upper reinforcement panel and by the body side inner panel and the first outer member in a front-to-rear direction, and a first inner cavity is further enclosed by the body side inner panel and the first inner member. The first inner member, the body side inner panel, and the first outer member form a stacked structure on each of a front side and a rear side of the second outer cavity and the first inner cavity, and are fixedly connected at the stacked structures.

Optionally, the D-pillar reinforcement panel, the roof cross member, and the roof longitudinal rail outer panel are connected on the upper side of the rear quarter window region to form the L-shaped first force transmission path. The first outer member and the C-pillar upper reinforcement panel are connected to form a Y-shaped second force transmission path, and the second force transmission path is connected to the first force transmission path by using the C-pillar upper reinforcement panel. An upper portion of the body side inner panel is connected to the roof longitudinal rail outer panel and the D-pillar reinforcement panel. The first inner member and the body side inner panel are connected to form a third force transmission path, and the third force transmission path is connected to the first force transmission path.

Optionally, the rear vehicle body structure further includes a second outer member and a second inner member that are both located on a lower rear side of the rear quarter window region. The second outer member is located behind the first outer member, and the second inner member is located behind the first inner member. Each of the second outer member and the second inner member has a structure with an opening facing the body side inner panel, and the second inner member and the second outer member are disposed with openings thereof facing each other. A third outer cavity and a second inner cavity are respectively enclosed by the body side inner panel and the second outer member and by the body side inner panel and the second inner member, at different positions of the body side inner panel.

The second outer member, the body side inner panel, and the second inner member form a stacked structure on each of a front side and a rear side of the third outer cavity and the second inner cavity, and are fixedly connected at the stacked structures.

Optionally, the first inner member and the first outer member are disposed with openings thereof aligned with each other. The second inner member and the second outer member are disposed with openings thereof aligned with each other. The rear vehicle body structure further includes a wheelhouse outer panel, and the second outer member and the first outer member are fixedly connected, at respective lower ends thereof, to the wheelhouse outer panel.

Optionally, a portion of the D-pillar reinforcement panel extends rearward and downward along the rear quarter window region. The portion of the D-pillar reinforcement panel is fixedly connected to an upper end of the second outer member. The second outer member, the D-pillar reinforcement panel, and the roof cross member are connected to form a fourth force transmission path. The fourth force transmission path has a route direction that bypasses the rear quarter window region from a rear side of the rear quarter window region.

Optionally, the rear vehicle body structure further includes a D-pillar inner panel. The D-pillar inner panel is fixedly connected to the roof cross member. An upper end of the second inner member is fixedly connected to the D-pillar inner panel. The second inner member, the D-pillar inner panel, and the roof cross member are connected to form a fifth force transmission path. The fifth force transmission path has a route direction that bypasses the rear quarter window region from a rear side of the rear quarter window region.

Optionally, the rear vehicle body structure further includes a wheelhouse inner panel. Both a lower end of the first inner member and a lower end of the second inner member are fixedly connected to the wheelhouse inner panel. A first raised channel and a second raised channel are formed on the wheelhouse inner panel in a manner of protruding from an outer side toward an inner side, an upper end of the first raised channel is a connection point between the lower end of the first inner member and the wheelhouse inner panel, and an upper end of the second raised channel is a connection point between the lower end of the second inner member and the wheelhouse inner panel.

Optionally, the rear vehicle body structure further includes a functional bracket configured to provide a mounting point for a seat assembly. The functional bracket is located between the first inner member and the second inner member and fixedly connected to both the first inner member and the second inner member. The first inner member, the second inner member, and the functional bracket are connected to form an H-shaped structure.

Optionally, the functional bracket is further fixedly connected to the body side inner panel. A connection point between the functional bracket and the first inner member, a connection point between the functional bracket and the second inner member, and a connection point between the functional bracket and the body side inner panel are respectively located at three different ends of the functional bracket. The three different ends are respectively a rear end of the functional bracket, a front end of the functional bracket, and an end of the functional bracket near vehicle exterior.

According to a second aspect, the present application further provides a vehicle. The vehicle includes the rear vehicle body structure according to any one of the foregoing.

In conclusion, the force transmission paths including the first outer member and the C-pillar upper reinforcement panel are designed to be located near the rear quarter window region, thereby allowing force to bypass the rear quarter window region to be transmitted and dissipated, so that the present application can, to the greatest extent, eliminate a reduction in force transmission efficiency of a vehicle body caused by an inherent structure (that is, the roof cross member and the C-pillar assembly are arranged in a staggered manner in a front-rear direction), thereby ensuring the force transmission efficiency of the vehicle body. Further, the three cavity structures are formed at positions near the rear quarter window region, so that the present application can further ensure torsional performance and rigidity of the vehicle body. Moreover, the first inner member, the first outer member, and the C-pillar upper reinforcement panel are disposed, so that the present application can further ensure that the vehicle has good rigidity.

The above description is only an overview of the technical solutions of the present application. In order to more clearly understand the technical means of the present application, the present application can be implemented according to the contents of the description; and in order to make the above and other objectives, features, and advantages of the present application more obvious and comprehensible, preferred embodiments are particularly given below, and are described in detail as follows with reference to the accompanying drawings.

### BRIEF DESCRIPTION OF THE DRAWINGS

FIG. 1 is a schematic diagram 1 of a rear vehicle body structure according to an embodiment of the present application.
FIG. 2 is an exploded view of a rear vehicle body structure according to an embodiment of the present application.
FIG. 3 is a diagram showing a comparison before and after assembly of a body side inner panel, a first outer member, a second outer member, and a C-pillar upper reinforcement panel according to an embodiment of the present application.
FIG. 4 is a schematic diagram 1 of main force transmission paths formed at positions near a rear quarter window region according to an embodiment of the present application (where transmission paths of force are indicated by dashed lines).
FIG. 5 is a schematic diagram 2 of a rear vehicle body structure according to an embodiment of the present application.
FIG. 6 is a schematic diagram 2 of main force transmission paths formed at positions near a rear quarter window region according to an embodiment of the present application (where transmission paths of force are indicated by dashed lines).
FIG. 7 is a partial schematic diagram of a rear vehicle body structure according to an embodiment of the present application.
FIG. 8 is a section view of A-A according to an embodiment of the present application.
FIG. 9 is an enlarged view of a portion indicated by an arrow ① in FIG. 8 according to an embodiment of the present application.
FIG. 10 is an enlarged view of a portion indicated by an arrow ② in FIG. 8 according to an embodiment of the present application.
FIG. 11 is a schematic diagram 3 of a rear vehicle body structure according to an embodiment of the present application.
FIG. 12 is schematic diagram of a first inner member, a functional bracket, and a second inner member after assembly according to an embodiment of the present application.
FIG. 13 is a diagram showing a comparison before and after assembly of a first inner member, a functional bracket, and a second inner member, that are connected to form an H-shaped structure, and a body side inner panel, a second outer member, and a first outer member according to an embodiment of the present application (the body side inner panel is hidden).

### List of reference signs:

1: roof cross member; 2: body side inner panel; 3: C-pillar upper reinforcement panel; 4: first outer member; 5: first inner member; 6: D-pillar reinforcement panel; 7: roof longitudinal rail outer panel; 8: first outer cavity; 9: second outer cavity; 10: first inner cavity; 11: C-pillar lower reinforcement panel; 12: wheelhouse outer panel; 13: D-pillar inner panel; 14: wheelhouse inner panel; 15: first raised channel; 16: second outer member; 17: second inner member; 18: rib; 19: second raised channel; 20: third outer cavity; 21: second inner cavity; and 22: functional bracket.

### DETAILED DESCRIPTION OF THE EMBODIMENTS

The specific implementations of the present application are described in more detail below with reference to the accompanying drawings and embodiments. The following embodiments are intended to illustrate the present application, but are not intended to limit the scope of the present application.

In the specification and claims of the present application, the terms such as "first" and "second" are intended to distinguish between similar objects but do not necessarily indicate a specific order or sequence.

In the description of the present application, unless otherwise clearly specified and limited, meanings of terms "provided", "mounted", "connected to", and "connected with" should be understood in a broad sense. For example, the connection may be a fixed connection, a removable connection, or an integral connection; may be a mechanical connection or an electrical connection; or may be a direct connection or an indirect connection by using an intermediate medium. In some cases, when expressing a fixed connection between an object and another object, a specific connection method may also include an integral connection. A person of ordinary skill in the art may understand specific meanings of the foregoing terms based on a specific situation.

In the present application, orientation or position relationships indicated by terms such as "upper", "lower", "left", "right", "front", "rear", "top", "bottom", "inner", and "outside" are orientation or position relationships shown in the accompanying drawings or when the product of the present application is usually placed in operation. These terms are only used to facilitate description and simplify the description, rather than to indicate or imply that the mentioned apparatus or components must have a specific orientation or must be established and operated in a specific orientation. Therefore, they should not be construed as a limitation to the present application.

In the present application, the terms "include", "comprise", or any other variations thereof are intended to cover a non-exclusive inclusion, and in addition to the elements listed, other elements not explicitly specified may also be included.

In the description of this specification, the description with reference to the terms such as "one embodiment", "some embodiments", "exemplarily", "a specific example", "optionally", "further", "more detailed description", "preferably", "further provided", "further comprise", or "some examples" means that the specific features, structures, materials, or characteristics described with reference to the embodiment or example are included in at least one embodiment or example of the present application. In this specification, the schematic representation of the above terms is not necessarily directed to the same embodiment or example. Furthermore, the specific features, structures, materials, or characteristics described may be combined in a suitable manner in any one or more embodiments or examples. In addition, various embodiments or examples described in the specification, as well as features of various embodiments or examples, may be integrated and combined by those skilled in the art without any contradiction.

It should be noted that, in the description of the present application, orientations or position relationships indicated by terms such as "end" are orientations or position relationships as shown in the drawings, and these terms are used to facilitate description of the present application and simplify the description, but not to indicate or imply that the mentioned components must have a specific orientation and must be constructed and operated in a specific orientation, and thus, these terms cannot be understood as a limitation to the present application.

From the front of a vehicle to the rear of the vehicle, a vehicle body structure includes a C-ring. In a related technology, the C-ring includes at least portions of two opposite C-pillar assemblies and a roof cross member. Ideally, the C-ring should be an approximately circular-shaped structure in the form of a parallelogram with rounded corners. In the field of vehicle design, the structural strength and design reasonableness of the C-ring are important factors that determine vehicle performance such as force transmission efficiency and torsional performance (for example, torsional mode and torsional rigidity) of a vehicle body.

Through research, it has been found that, for most vehicle models whose body side includes a rear quarter window region (namely, a region for installing a light-transmitting rear quarter window), if a roof cross member and a C-pillar assembly are arranged in a staggered manner in a front-rear direction of the vehicle, and in consideration of design constraints caused by the presence of the rear quarter window region, a C-ring tends to exhibit a structural defect of discontinuous transition, resulting in reduced force transmission efficiency and rigidity of the vehicle body, and reduced torsional performance of the vehicle body. In view of this, it is necessary to provide a proper rear vehicle body structure designed for such a vehicle model that has a discontinuous C-ring characteristic, so as to improve the force transmission efficiency, rigidity, and torsional performance of the vehicle body as much as possible. A vehicle in embodiments of the present application is described in detail below with reference to the accompanying drawings.

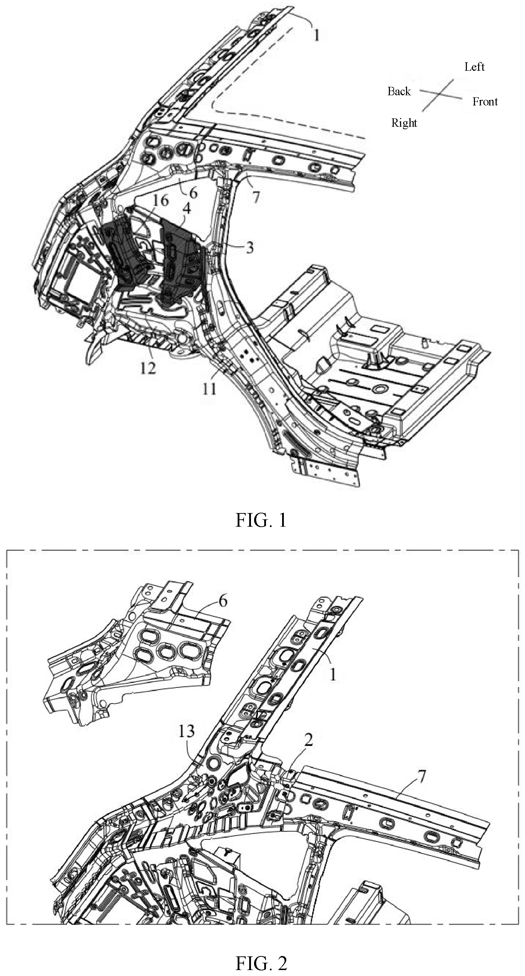

As shown in FIG. 1 and FIG. 2, an embodiment provides a vehicle. The vehicle is a vehicle model whose rear portion is equipped with a triangular rear quarter window. A left rear portion and a right rear portion of the vehicle are substantially the same in design. The right rear portion of the vehicle is used as an example. The right rear portion of the vehicle is provided with a C-pillar assembly, a D-pillar assembly, and a roof cross member 1, with the roof cross member 1 located diagonally behind the C-pillar assembly. In other words, the roof cross member 1 and the C-pillar assembly are arranged in a staggered manner in the front-rear direction, which causes the C-ring in this embodiment to fail to achieve an ideal form and instead exhibit a structural defect of discontinuous transition. In view of this, a rear portion structure of a vehicle in this embodiment has the design as follows.

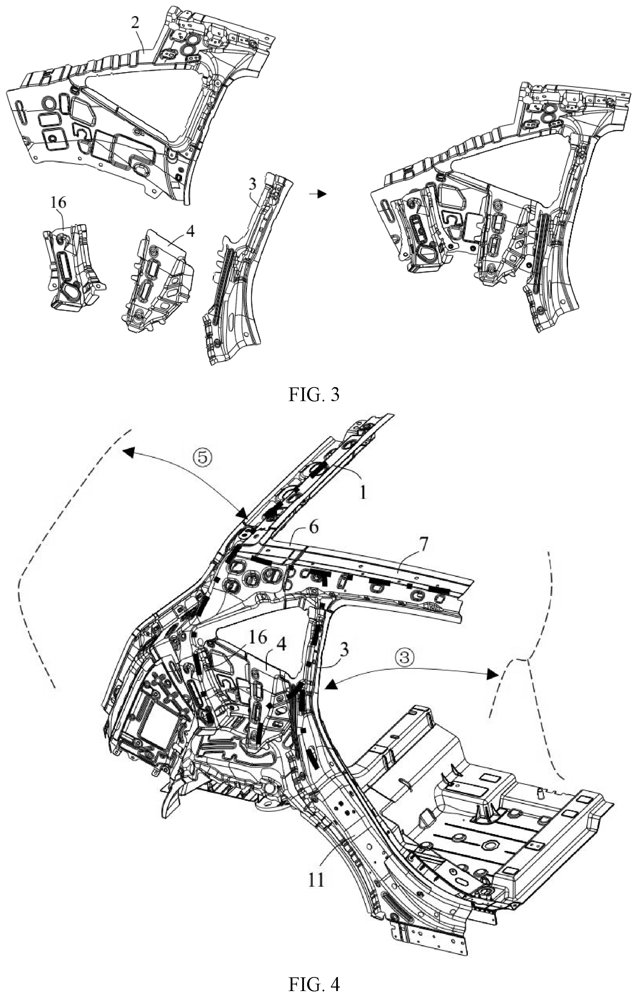

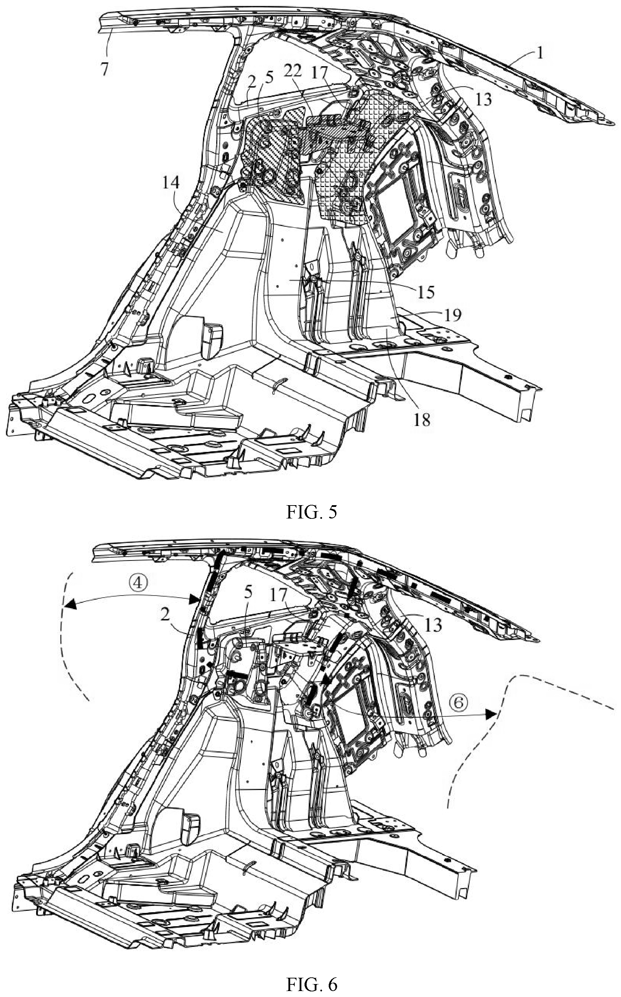

As shown in FIG. 3 and FIG. 5, in addition to the roof cross member 1, a rear portion of the vehicle is further provided with a body side inner panel 2, a C-pillar upper reinforcement panel 3 (belonging to the C-pillar assembly), a first outer member 4, a first inner member 5, a D-pillar reinforcement panel 6 (belonging to the D-pillar assembly), and a roof longitudinal rail outer panel 7. The body side inner panel 2 is provided with a rear quarter window region penetrating through the body side inner panel 2. The D-pillar reinforcement panel 6, the roof cross member 1, and the roof longitudinal rail outer panel 7 are connected on an upper side of the rear quarter window region to form a first force transmission path. Both the first outer member 4 and the first inner member 5 are fixed on a lower side of the rear quarter window region and are located on an outer side and an inner side of the body side inner panel 2, respectively. The C-pillar upper reinforcement panel 3 is fixed on an outer side of the body side inner panel 2, an upper end of the C-pillar upper reinforcement panel 3 is fixedly connected to the roof longitudinal rail outer panel 7, and the C-pillar upper reinforcement panel 3 has a portion that extends from a front side of the rear quarter window region to the lower side of the rear quarter window region and is fixedly connected to the first outer member 4.

It should be noted herein that, in this embodiment, the body side inner panel 2 is sometimes also referred to as a C-pillar inner panel. However, it may be understood that only a portion of the body side inner panel 2 belongs to the C-pillar assembly in this embodiment.

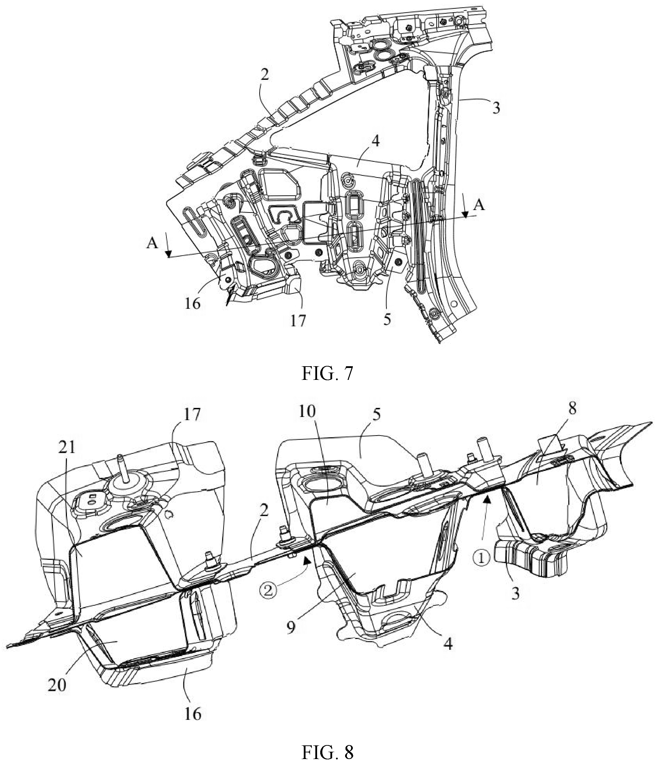

Referring to FIG. 7 and FIG. 8, each of the C-pillar upper reinforcement panel 3, the first outer member 4, and the first inner member 5 has a structure with an opening facing the body side inner panel 2, and the first inner member 5 and the first outer member 4 are disposed with openings thereof facing each other. Based on arrangement of these openings, two cavities: a first outer cavity 8 and a second outer cavity 9 are respectively enclosed by the body side inner panel 2 and the C-pillar upper reinforcement panel 3 and by the body side inner panel 2 and the first outer member 4 in a front-to-rear direction, and a first inner cavity 10 is further enclosed by the body side inner panel 2 and the first inner member 5. As shown in FIG. 8, FIG. 9, and FIG. 10, the first inner member 5, the body side inner panel 2, and the first outer member 4 form a stacked structure on each of a front side and a rear side of the second outer cavity 9 and the first inner cavity 10, and are fixedly connected at the stacked structures.

As can be seen from the above structure that, when the vehicle is subjected to force, the force can be transmitted along the first outer member 4 to the C-pillar upper reinforcement panel 3, and then transmitted into the first force transmission path through the C-pillar upper reinforcement panel 3. Accordingly, it may be understood that, when force (caused by traveling of the vehicle) is transmitted from the under body of the vehicle to a position near the rear quarter window region, the force can be transmitted and dissipated along a path of "the first outer member 4 - the C-pillar upper reinforcement panel 3 - the roof longitudinal rail outer panel 7 - the D-pillar reinforcement panel 6 - the roof cross member 1" to bypass the rear quarter window region, thereby ensuring the force transmission efficiency of the vehicle body.

Further, since the first inner cavity 10, the second outer cavity 9, and the first outer cavity 8 are respectively enclosed by the first inner member 5 and the body side inner panel 2, by the first outer member 4 and the body side inner panel 2, and by the C-pillar upper reinforcement panel 3 and the body side inner panel 2, and the first inner member 5 and the first outer member 4 are disposed with openings thereof facing each other, three cavity structures are formed at positions near the rear quarter window region in this embodiment. It may be understood that, due to these cavities formed, both the torsional performance and rigidity of the vehicle body can be improved. Moreover, since "the first inner member 5, the body side inner panel 2, and the first outer member 4 form the stacked structures, and the three are fixedly connected at the stacked structures", it may be understood that, the first inner member 5, the body side inner panel 2, and the first outer member 4 together with the C-pillar upper reinforcement panel 3 have good stability, reliability, and modality, and the presence of the first inner member 5, the body side inner panel 2, and the first outer member 4 together with the C-pillar upper reinforcement panel 3 can ensure that the vehicle body has good rigidity.

For the above vehicle, the following provides more detailed exemplary arrangement.

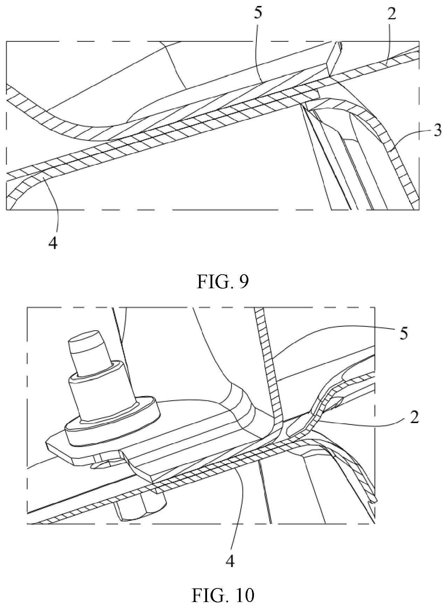

Referring to FIG. 8 again, the first inner member 5 and the first outer member 4 are disposed with openings thereof facing each other, and the openings are substantially aligned with each other. The first outer member 4, the body side inner panel 2, and the second outer member 16 form a three-layer stacked structure, on each of a front side and a rear side of the first outer cavity 8 and the first inner cavity 10, that is, at each of positions indicated by arrows □ and □, as shown in FIG. 9 and FIG. 10, and the first outer member 4, the body side inner panel 2, and the second outer member 16 are welded at the stacked structures.

Referring back to FIG. 1 and FIG. 2, the roof longitudinal rail outer panel 7 is disposed in a manner of extending in a front-rear direction, the roof cross member 1 is disposed in a manner of extending in a left-right direction, and a portion of the D-pillar reinforcement panel 6 is located between the roof cross member 1 and the roof longitudinal rail outer panel 7, and has a route direction that extends rearward and downward from this portion along an upper edge of the rear quarter window region. In this embodiment, at the right rear portion of the vehicle, the D-pillar reinforcement panel 6, the roof cross member 1, and the roof longitudinal rail outer panel 7 are connected on the upper side of the rear quarter window region to form the L-shaped first force transmission path (in FIG. 1, the route direction of the first force transmission path is schematically illustrated for emphasis by an L-shaped dashed line near the first force transmission path).

Referring to FIG. 2 and FIG. 3 again, the body side inner panel 2, the first outer member 4, and the C-pillar upper reinforcement panel 3 are all irregularly shaped members. The body side inner panel 2 is welded, at an upper portion of the body side inner panel 2, to the roof longitudinal rail outer panel 7 and the D-pillar reinforcement panel 6. The first outer member 4 has a structure in which a middle portion of the first outer member 4 protrudes toward exterior of the vehicle, and an upper end and most of front and rear edge portions of the first outer member 4 are welded to the body side inner panel 2. The C-pillar upper reinforcement panel 3 has an uneven shape with recessed portions. An upper end of the C-pillar upper reinforcement panel 3 is located on a front side of a front edge of the rear quarter window region. The C-pillar upper reinforcement panel 3 is welded, at the upper end of the C-pillar upper reinforcement panel 3, to the roof longitudinal rail outer panel 7, and has a route direction of extending downward from the upper end of the C-pillar upper reinforcement panel 3 along the front edge of the rear quarter window region. A portion of the C-pillar upper reinforcement panel 3 located on the front side of the rear quarter window region is welded to a front portion of the body side inner panel 2, and the C-pillar upper reinforcement panel 3 is welded, at a middle portion and a lower end of the C-pillar upper reinforcement panel 3 and on a lower side of the rear quarter window region, to most of a front edge portion of the first outer member 4 and to the body side inner panel 2.

It may be learned from the foregoing that, as shown in FIG. 4, the first outer member 4, the C-pillar upper reinforcement panel 3, and the roof longitudinal rail outer panel 7 are actually connected to form the Y-shaped second force transmission path (in FIG. 4, the route direction of the second force transmission path is schematically illustrated for emphasis by a dashed line; and for ease of viewing, the dashed line is shown outside the schematic structure and indicated by a bidirectional arrow ③), and the second force transmission path is connected to the L-shaped first force transmission path through the C-pillar upper reinforcement panel 3.

For example, the right rear portion of the vehicle is further provided with a C-pillar lower reinforcement panel 11 located on a lower side of the C-pillar upper reinforcement panel 3. It may be understood that the C-pillar upper reinforcement panel 3 and the C-pillar lower reinforcement panel 11 are welded to each other to form part of a rear door frame structure. As shown in FIG. 1, the vehicle exemplarily further includes a wheelhouse outer panel 12. The wheelhouse outer panel 12 is located on a lower side of the first outer member 4 and is fixed (by at least one of, for example, welding, screwing, or riveting) to a lower end of the first outer member 4 to further enhance the force transmission efficiency of the vehicle body.

Referring to FIG. 5 again, similar to the first outer member 4, the first inner member 5, whose opening faces the opening of the first outer member 4, is also an irregularly shaped member. The first inner member 5 has a structure in which a middle portion of the first inner member 5 protrudes toward the interior of the vehicle, and an upper end and most of front and rear edge portions of the first inner member 5 are welded to the body side inner panel 2. With reference to FIG. 2, FIG. 5, and FIG. 11, the right rear portion of the vehicle is further provided with a D-pillar inner panel 13. The D-pillar inner panel 13 is located on an inner side of the D-pillar reinforcement panel 6 and is welded to the D-pillar reinforcement panel 6, the body side inner panel 2, and the roof cross member 1. Based on this, referring back to FIG. 5 and FIG. 6, for the first inner member 5, the first inner member 5 and the body side inner panel 2 are connected to form the arc-shaped third force transmission path (in FIG. 6, the route direction of the third force transmission path is schematically illustrated for emphasis by a dashed line; and for ease of viewing, the dashed line is shown outside the schematic structure and indicated by a bidirectional arrow ④). The third force transmission path is connected to the first force transmission path. When force is transmitted from the under body of the vehicle, the force can be transmitted and dissipated along the third force transmission path.

For example, the vehicle further includes a wheelhouse inner panel 14 (specifically an aluminum casting panel). The first inner member 5 is fixed (by at least one of, for example, welding, screwing, or riveting), at a lower end of the first inner member 5, to the wheelhouse inner panel 14 to further enhance the force transmission efficiency of the vehicle body. For example, a first raised channel 15 is formed on the wheelhouse inner panel 14 in a manner of protruding from an outer side toward an inner side. An upper end of the first raised channel 15 is a connection point between the lower end of the first inner member 5 and the wheelhouse inner panel 14. It may be understood that arrangement of the first raised channel 15 facilitates improving efficiency of transmitting force from the under body of the vehicle to the first inner member 5, and enhancing stability of connection between the first inner member 5 and the wheelhouse inner panel 14.

Referring back to FIG. 1 and FIG. 3, the vehicle further includes a second outer member 16 located on a lower rear side of the rear quarter window region. The second outer member 16 is located behind the first outer member 4 and outside the body side inner panel 2. As an irregularly shaped member, the second outer member 16 has a structure in which a middle portion of the second outer member 16 protrudes toward the exterior of the vehicle, and an upper end and most of front and rear edge portions of the second outer member 16 are welded to the body side inner panel 2. For example, an upper end of the second outer member 16 is welded to the D-pillar reinforcement panel 6, and a lower end of the second outer member 16 is fixed (by at least one of, for example, welding, screwing, or riveting) to the wheelhouse outer panel 12. As shown in FIG. 4, the second outer member 16, the D-pillar reinforcement panel 6, and the roof cross member 1 are connected to form the arc-shaped fourth force transmission path (in FIG. 4, the route direction of the fourth force transmission path is schematically illustrated for emphasis by a dashed line; and for ease of viewing, the dashed line is shown outside the schematic structure and indicated by a bidirectional arrow ⑤). When force is transmitted from the under body of the vehicle, the force can be transmitted and dissipated along the fourth power transmission path.

Based on the design of the first outer member 4 and the C-pillar upper reinforcement panel 3, it may be learned that, force transmission paths are respectively provided on the front and rear sides of the quarter window region on the exterior surface of the vehicle body. On the front side of the quarter window region, the corresponding force transmission path is specifically the Y-shaped second force transmission path that bypasses the rear quarter window region from the front side of the rear quarter window region, and is connected to the first force transmission path. On the rear side of the quarter window region, the corresponding force transmission path is specifically the arc-shaped fourth force transmission path that has a route direction that bypasses the rear quarter window region from the rear side of the rear quarter window region.

Referring to FIG. 5 again, the vehicle further includes a second inner member 17 located on the lower rear side of the rear quarter window region. The second inner member 17 is located behind the first inner member 5 and inside the body side inner panel 2. As an irregularly shaped member, the second inner member 17 has a structure in which a middle portion of the second inner member 17 protrudes toward the interior of the vehicle, and most of front and rear edge portions of the second inner member 17 are welded to the body side inner panel 2. An upper end of the second inner member 17 is welded to the D-pillar inner panel 13.

As shown in FIG. 6, the second inner member 17, the D-pillar inner panel 13, and the roof cross member 1 are connected to form the fifth force transmission path (in FIG. 6, the route direction of the fifth force transmission path is schematically illustrated for emphasis by a dashed line; and for ease of viewing, the dashed line is shown outside the schematic structure and indicated by a bidirectional arrow ⑥). When force is transmitted from the under body of the vehicle, the force can be transmitted and dissipated along the fifth force transmission path.

Referring to FIG. 5 again, similar to the first inner member 5, a lower end of the second inner member 17 is exemplarily fixedly connected (by at least one of, for example, welding, screwing, or riveting) to the wheelhouse inner panel 14. Two spaced ribs 18 are formed on the wheelhouse inner panel 14 in a manner of protruding from an outer side toward an inner side. The two ribs 18 form a second raised channel 19. An upper end of the second raised channel 19 is a connection point between the lower end of the second inner member 17 and the wheelhouse inner panel 14. Such arrangement facilitates improving efficiency of transmitting force from the under body of the vehicle to the first inner member 5, and enhancing stability of connection between the first inner member 5 and the wheelhouse inner panel 14.

In addition, based on design of the first inner member 5, it may be learned that, force transmission paths are respectively provided on the front and rear sides of the quarter window region on the interior surface of the vehicle body. On the front side of the quarter window region, the corresponding force transmission path is specifically the arc-shaped third force transmission path that bypasses the rear quarter window region from the front side of the rear quarter window region, and is connected to the first force transmission path. On the rear side of the quarter window region, the corresponding force transmission path is specifically the fifth force transmission path that has a route direction that bypasses the rear quarter window region from the rear side of the rear quarter window region.

Referring to FIG. 7 and FIG. 8 again, to ensure torsional performance and rigidity of the vehicle body, for example, each of the second outer member 16 and the second inner member 17 has a structure with an opening facing the body side inner panel 2, and the second inner member 17 and the second outer member 16 are disposed with openings thereof facing each other and being aligned with each other. A third outer cavity 20 and a second inner cavity 21 are respectively enclosed by the body side inner panel 2 and the second outer member 16 and by the body side inner panel 2 and the second inner member 17, at different positions of the body side inner panel 2. In addition, similar to the design of the first inner member 5 and the first outer member 4, the second outer member 16, the body side inner panel 2, and the second inner member 17 form a three-layer stacked structure on each of a front side and a rear side of the third outer cavity 20 and the second inner cavity 21, and are welded at the stacked structures.

In this way, based on the arrangement of the first outer cavity 8, the second outer cavity 9, and the first inner cavity 10, it may be learned that, the first outer cavity 8, the second outer cavity 9, and the third outer cavity 20 are sequentially arranged from front to rear on the outer side of the body side inner panel 2, while the first inner cavity 10 and second inner cavity 21 are sequentially arranged from front to rear on the inner side of the body side inner panel 2. In this embodiment, the design of the first inner member 5, the first outer member 4, and the C-pillar upper reinforcement panel 3 reinforces the C-ring structure of the vehicle, while the arrangement of the second inner member 17 and the second outer member 16 reinforces the D-ring structure of the vehicle.

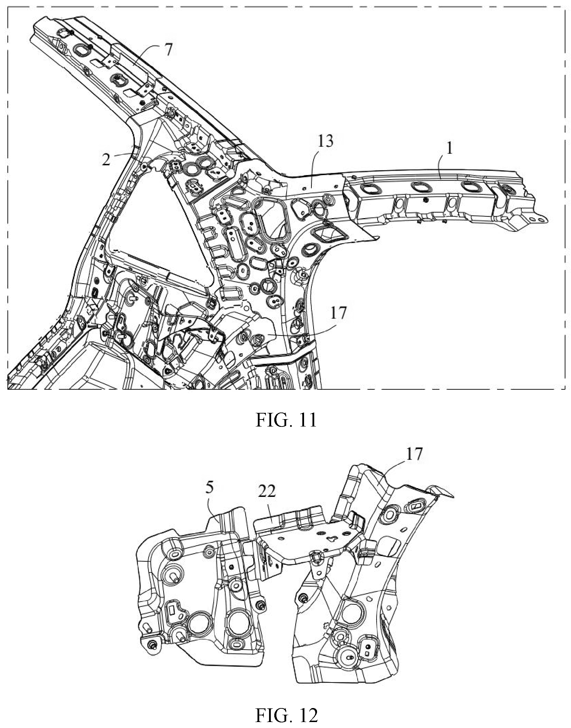

Referring back to FIG. 5 and FIG. 12, the vehicle exemplarily further includes a functional bracket 22 configured to provide a reliable mounting point for a seat assembly (not shown in FIG. 5 or FIG. 12) inside the vehicle, and the second inner member 17 also provides a reliable mounting point for the seat assembly inside the vehicle. More specifically, the seat assembly includes a retractor and a power striker (Power striker) of a seat adjustment mechanism. The protruding middle portion of the second inner member 17 provides a mounting point for the power striker of the seat adjustment mechanism. The functional bracket 22 is an irregularly shaped member, a rear portion of the functional bracket 22 provides a supporting structure for the retractor, and a front portion of the functional bracket 22 provides a mounting point for the retractor. It may be understood that, depending on specific needs of those skilled in the art, the functional bracket 22 can provide more mounting points for the seat assembly. For example, in a possible embodiment, the seat assembly further includes a seat belt guide ring, and the front portion of the functional bracket 22 can also provide a mounting point for the seat belt guide ring.

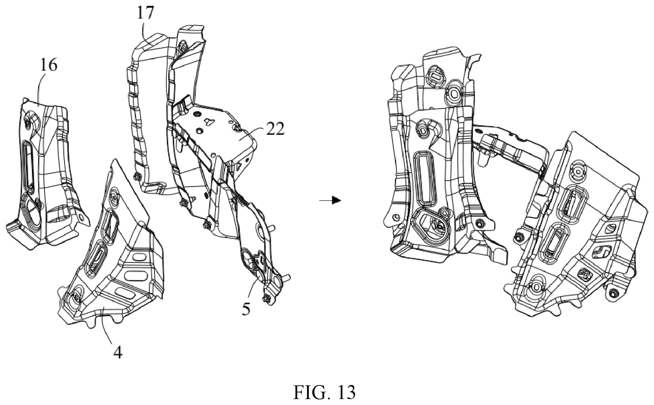

In view of the foregoing description, the functional bracket 22 is exemplarily located between the first inner member 5 and the second inner member 17, and is connected to the first inner member 5 and the second inner member 17 to form an H-shaped structure, as shown in FIG. 13. It may be understood that, the H-shaped structure, in combination with the arrangement of six members: the C-pillar upper reinforcement panel 3, the first inner member 5, the second inner member 17, the first outer member 4, the second outer member 16, and the body side inner panel 2, can ensure stability and reliability of connection between the functional bracket 22 and the seat assembly. In addition, the H-shaped structure formed due to the presence of the functional bracket 22 in turn further enhances the structural stability of the six members, thereby ensuring the force transmission efficiency, and torsional performance and rigidity of the vehicle body.

It should be further noted that, since the functional bracket 22 is directly or indirectly connected to the above six members, the seat assembly also exhibits favorable modal characteristics.

Referring to FIG. 5 again, the functional bracket 22 is exemplarily fixed in a manner as follows: the functional bracket 22 is welded, at a front portion and a rear portion of the functional bracket 22, to the first inner member 5 and the second inner member 17, and is welded, at an end (that is, a right portion) of the functional bracket 22 close to the exterior of the vehicle, the body side inner panel 2. Therefore, it may be learned that on the functional bracket 22, the connection point between the functional bracket 22 and the first inner member 5, the connection point between the functional bracket 22 and the second inner member 17, and the connection point between the functional bracket 22 and the body side inner panel 2 can actually form a spatial structure similar to a triangle. It may be understood that, such arrangement can ensure the stability of arrangement of the functional bracket 22.

In conclusion, the force transmission paths including the first outer member 4 and the C-pillar upper reinforcement panel 3 are designed to be located near the rear quarter window region, thereby allowing force to bypass the rear quarter window region to be transmitted and dissipated, so that the present application can, to the greatest extent, eliminate a reduction in force transmission efficiency of a vehicle body caused by an inherent structure (that is, the roof cross member 1 and the C-pillar assembly are arranged in a staggered manner in a front-rear direction), thereby ensuring the force transmission efficiency of the vehicle body. Further, the three cavity structures are formed at positions near the rear quarter window region, so that the present application can further ensure torsional performance and rigidity of the vehicle body. Moreover, the first inner member 5, the first outer member 4, and the C-pillar upper reinforcement panel 3 are disposed, so that the present application can further ensure that the vehicle has good rigidity.

The foregoing descriptions are merely specific implementations of the present application, but the protection scope of the present application is not limited thereto. Any variation or replacement readily figured out by persons skilled in the art within the technical scope disclosed in the present application shall fall within the protection scope of the present application. Therefore, the protection scope of the present application shall be subject to the protection scope of the claims.

## Claims

1. A rear vehicle body structure, comprising a body side inner panel (2), a C-pillar upper reinforcement panel (3), a first outer member (4), a first inner member (5), a D-pillar reinforcement panel (6), a roof cross member (1), and a roof longitudinal rail outer panel (7), wherein the body side inner panel (2) is provided with a rear quarter window region penetrating through the body side inner panel (2); the D-pillar reinforcement panel (6), the roof cross member (1), and the roof longitudinal rail outer panel (7) are connected on an upper side of the rear quarter window region to form a first force transmission path; both the first outer member (4) and the first inner member (5) are fixed on a lower side of the rear quarter window region and are located on an outer side and an inner side of the body side inner panel (2), respectively; and the C-pillar upper reinforcement panel (3) is fixed on the outer side of the body side inner panel (2), an upper end of the C-pillar upper reinforcement panel (3) is fixedly connected to the roof longitudinal rail outer panel (7), and the C-pillar upper reinforcement panel (3) has a portion that extends from a front side of the rear quarter window region to the lower side of the rear quarter window region and is fixedly connected to the first outer member (4); and
each of the C-pillar upper reinforcement panel (3), the first outer member (4), and the first inner member (5) has a structure with an opening facing the body side inner panel (2), and the first inner member (5) and the first outer member (4) are disposed with openings thereof facing each other; a first outer cavity (8) and a second outer cavity (9) are respectively enclosed by the body side inner panel (2) and the C-pillar upper reinforcement panel (3) and by the body side inner panel (2) and the first outer member (4) in a front-to-rear direction, and a first inner cavity (10) is further enclosed by the body side inner panel (2) and the first inner member (5); and the first inner member (5), the body side inner panel (2), and the first outer member (4) form a stacked structure on each of a front side and a rear side of the second outer cavity (9) and the first inner cavity (10), and are fixedly connected at the stacked structures.

2. The rear vehicle body structure according to claim 1, wherein the D-pillar reinforcement panel (6), the roof cross member (1), and the roof longitudinal rail outer panel (7) are connected on the upper side of the rear quarter window region to form the L-shaped first force transmission path; the first outer member (4) and the C-pillar upper reinforcement panel (3) are connected to form a Y-shaped second force transmission path, and the second force transmission path is connected to the first force transmission path by using the C-pillar upper reinforcement panel (3); an upper portion of the body side inner panel (2) is connected to the roof longitudinal rail outer panel (7) and the D-pillar reinforcement panel (6); and the first inner member (5) and the body side inner panel (2) are connected to form a third force transmission path, and the third force transmission path is connected to the first force transmission path.

3. The rear vehicle body structure according to claim 1 or 2, further comprising a second outer member (16) and a second inner member (17) that are both located on a lower rear side of the rear quarter window region; the second outer member (16) is located behind the first outer member (4), and the second inner member (17) is located behind the first inner member (5); each of the second outer member (16) and the second inner member (17) has a structure with an opening facing the body side inner panel (2), and the second inner member (17) and the second outer member (16) are disposed with openings thereof facing each other; and a third outer cavity (20) and a second inner cavity (21) are respectively enclosed by the body side inner panel (2) and the second outer member (16) and by the body side inner panel (2) and the second inner member (17), at different positions of the body side inner panel (2); and
the second outer member (16), the body side inner panel (2), and the second inner member (17) form a stacked structure on each of a front side and a rear side of the third outer cavity (20) and the second inner cavity (21), and are fixedly connected at the stacked structures.

4. The rear vehicle body structure according to claim 3, wherein the first inner member (5) and the first outer member (4) are disposed with openings thereof aligned with each other; the second inner member (17) and the second outer member (16) are disposed with openings thereof aligned with each other; and the rear vehicle body structure further comprises a wheelhouse outer panel (12), and the second outer member (16) and the first outer member (4) are fixedly connected, at respective lower ends thereof, to the wheelhouse outer panel (12).

5. The rear vehicle body structure according to claim 3 or 4, wherein a portion of the D-pillar reinforcement panel (6) extends rearward and downward along the rear quarter window region; the portion of the D-pillar reinforcement panel (6) is fixedly connected to an upper end of the second outer member (16); the second outer member (16), the D-pillar reinforcement panel (6), and the roof cross member (1) are connected to form a fourth force transmission path; and the fourth force transmission path has a route direction that bypasses the rear quarter window region from a rear side of the rear quarter window region.

6. The rear vehicle body structure according to claim 3 or 4, further comprising a D-pillar inner panel (13), wherein the D-pillar inner panel (13) is fixedly connected to the roof cross member (1); an upper end of the second inner member (17) is fixedly connected to the D-pillar inner panel (13); the second inner member (17), the D-pillar inner panel (13), and the roof cross member (1) are connected to form a fifth force transmission path; and the fifth force transmission path has a route direction that bypasses the rear quarter window region from a rear side of the rear quarter window region.

7. The rear vehicle body structure according to claim 3 or 4, further comprising a wheelhouse inner panel (14), wherein both a lower end of the first inner member (5) and a lower end of the second inner member (17) are fixedly connected to the wheelhouse inner panel (14); and a first raised channel (15) and a second raised channel (19) are formed on the wheelhouse inner panel (14) in a manner of protruding from an outer side toward an inner side, an upper end of the first raised channel (15) is a connection point between the lower end of the first inner member (5) and the wheelhouse inner panel (14), and an upper end of the second raised channel (19) is a connection point between the lower end of the second inner member (17) and the wheelhouse inner panel (14).

8. The rear vehicle body structure according to claim 3 or 4, further comprising a functional bracket (22) configured to provide a mounting point for a seat assembly, wherein the functional bracket (22) is located between the first inner member (5) and the second inner member (17) and fixedly connected to both the first inner member (5) and the second inner member (17); and the first inner member (5), the second inner member (17), and the functional bracket (22) are connected to form an H-shaped structure.

9. The rear vehicle body structure according to claim 7, wherein the functional bracket (22) is further fixedly connected to the body side inner panel (2); a connection point between the functional bracket (22) and the first inner member (5), a connection point between the functional bracket (22) and the second inner member (17), and a connection point between the functional bracket (22) and the body side inner panel (2) are respectively located at three different ends of the functional bracket (22); and the three different ends are respectively a rear end of the functional bracket (22), a front end of the functional bracket (22), and an end of the functional bracket (22) near vehicle exterior.

10. A vehicle, comprising the rear vehicle body structure according to any one of claims 1 to 9.
